# EUROPÄISCHE PATENTSCHRIFT

(11) **EP 1 626 875 B1**
(45) Veröffentlichungstag und Bekanntmachung des Hinweises auf die Patenterteilung: **28.04.2010**
(21) Anmeldenummer: 04739267.5
(22) Anmeldetag: 19.05.2004
(51) Int. Cl.: B60B 23/00, B60B 1/10, B60B 3/10

(54) **FAHRZEUGRAD IN BLECHBAUWEISE, INSBESONDERE AUS STAHLBLECH**
VEHICLE WHEEL CONSISTING OF SHEET METAL, ESPECIALLY SHEET STEEL
ROUE DE VEHICULE EN TOLE, NOTAMMENT EN TOLE D'ACIER

(30) Priorität: 23.05.2003 DE 10323833
(43) Veröffentlichungstag der Anmeldung: 22.02.2006
(73) Patentinhaber: ThyssenKrupp Steel Europe AG, 47166 Duisburg (DE)
(72) Erfinder: BLÜMEL, Klaus, 46537 Dinslaken (DE)
(74) Vertreter: Cohausz & Florack
(86) Internationale Anmeldenummer: PCT/EP2004/005424
(87) Internationale Veröffentlichungsnummer: WO 2004/103733

(56) Entgegenhaltungen:
- WO-A-2004/024469
- DE-A- 19 522 270
- FR-A- 843 614
- GB-A- 351 638

## Beschreibung

Die Erfindung betrifft ein Fahrzeugrad in Blechbauweise, insbesondere aus Stahlblech, mit einer ein Felgenbett sowie ein außenseitiges und ein innenseitiges Felgenhorn aufweisenden Felge und einer mit dem außenseitigen Felgenhorn verbundenen und das Felgenbett abstützenden Radschüssel, die einen zentralen Befestigungsbereich und in einem um diesen Befestigungsbereich herum liegenden Ringbereich Belüftungsöffnungen aufweist, wobei die Radschüssel einschalig ausgebildet ist und am radialen Außenrand der Belüftungsöffnungen Laschen angebunden sind, die sich in Richtung des Felgenbettes erstrecken und mit dem Felgenbett fest verbunden sind.

Fahrzeugräder in Blechbauweise sind in verschiedenen Ausführungen bekannt. Aus der Praxis und/oder der Literatur sind Fahrzeugräder sowohl aus Stahlblech als auch Aluminiumblech bekannt.

Bei einem bekannten Fahrzeugrad aus Aluminiumblech (DE 33 28 135 A1) ist die Radschüssel aus zwei Blechformteilen zusammengesetzt, die im zentralen Befestigungsbereich und in dem um diesen Bereich herum liegenden Ringbereich fest aufeinander liegen, während sie im felgennahen Bereich auseinander und zu den Felgenhörnern laufen, wo sie von diesen durch Umbördelungen umgriffen sind. Dabei bildet der zum innenseitigen Felgenhorn verlaufende Teil zusätzlich eine Abstützung für das Felgenbett.

Bei diesem bekannten Fahrzeugrad sind die Teile ausschließlich durch Formschluss zusammengehalten. Nachteilig bei einem solchen Fahrzeugrad ist, dass die Radschüssel für eine solche Befestigung doppelschalig ausgebildet ist.

Bei einem anderen bekannten Fahrzeugrad (FR 843 614, insbesondere Fig. 5 und 6) der eingangs genannten Art werden die Laschen von aus dem äußeren Ringbereich der Radschüssel zungenartig freigeschnittenen Teilen gebildet. Die zwischen diesen freigeschnittenen Bereichen liegenden Stege sind flach ausgebildet und gehen in den mittleren, in Umfangsrichtung geschlossenen und an den zentralen Befestigungsbereich angrenzenden mittleren Bereich über. Ein solches Fahrzeugrad vermittelt den optischen Eindruck einer im wesentlichen geschlossenen Radschüssel mit im äußeren Ringbereich liegenden Belüftungsöffnungen. Mit dem gefälligem Aussehen eines gegossenen Aluminiumrades mit Speichen ist ein solches Fahrzeugrad nicht vergleichbar.

Bei einem ganz andersartigen bekannten Fahrzeugrad in Blechbauweise (DE 1 605 545 A, insbesondere Fig. 1), das aus einer Felge aus Blech und einem daran angeschweißten Mittelteil besteht, ist der außerhalb des zentralen Befestigungsbereichs liegende Bereich nach Speichenart ausgebildet, wobei das Ende einer jeden Speiche an der Felge angeschweißt ist. Die Speichen haben ein versteifendes Profil. Die Anbindung bei einem solchen Rad nur über die Enden der Speichen nur an der Radfelge ist nicht optimal.

Der Erfindung liegt die Aufgabe zugrunde, ein Fahrzeugrad in Blechbauweise zu schaffen, das kostengünstig und einfach herstellbar ist und eine hohe Steifigkeit aufweist.

Diese Aufgabe wird mit einem Fahrzeugrad der eingangs genannten Art dadurch gelöst, dass die zwischen den Belüftungsöffnungen verbliebenen, radialen Stege sich bis zu dem Befestigungsbereich erstrecken und als Speichen mit einer versteifenden Profilierung ausgebildet sind, und dass die Radschüssel mittels einer Umbördelung ihres Außenrandes formschlüssig mit dem außenseitigen Felgenhorn verbunden ist. Dabei kann vorzugsweise die versteifende Profilierung bogenförmig sein.

Wegen dieser besonderen Art der Anbindung der Radschüssel an die Radfelge in Verbindung mit der Ausbildung der Stege als Speichen hat das erfindungsgemäße Rad eine hohe Steifigkeit und gleichzeitig das gefällige Aussehen eines Speichenrades.

Gerade die Umbördelung hat einen ästhetisch positiven Effekt. Außerdem ist diese Art der formschlüssigen Verbindung der Radschüssel und des Felgenhorns fertigungstechnisch besonders günstig.

Die Herstellung des Fahrzeugrades ist insbesondere dann mit geringem Aufwand verbunden, wenn nach einer Ausgestaltung der Erfindung der Ringbereich zungenartig freigeschnittene Teile zur Bildung der Belüftungsöffnungen und der Laschen aufweist, wobei die die Laschen bildenden freigeschnittenen, zungenartigen Teile nur noch an ihren radialen Außenrändern mit der Radschüssel verbunden sind sowie zur Radinnenseite abgestellt sind. Bei dieser Ausgestaltung ist die Radschüssel einteilig ausgebildet. Die Laschen brauchen deshalb nicht separat z.B. durch Schweißung oder Lötung an die Radschüssel angebunden zu werden.

Die Formsteifigkeit des Fahrzeugrades kann weiter dadurch erhöht werden, dass zwischen den Laschen und der Felge Hohlräume ausgebildet sind. Dies lässt sich insbesondere dann optimal verwirklichen, wenn das Felgenbett als Tiefbett ausgebildet ist.

Fertigungstechnisch ist es weiter von Vorteil, wenn die Verbindung zwischen dem Felgenbett und den Laschen der Radschüssel stoffschlüssig ist. Als stoffschlüssige Verbindung eignet sich vor allem für nur schwer schweißbare Werkstoffe eine MIG-Lötung.

Vorzugsweise ist die Blechdicke der Felge und/oder der Radschüssel in ihrem axialen Verlauf bzw. radialen entsprechend der im Betrieb auftretenden lokalen Belastung dimensioniert. In diesem Sinne und zur Gewichtsoptimierung kann die Radschüssel, die mit zunehmenden Abstand von der Radachse eine abnehmende betriebliche Querschnittbelastung hat, in der Blechdicke entsprechend zunehmend ausgedünnt sein. Die Maßnahmen zur Gewichtsoptimierung können bei der Fertigung kombiniert werden, indem in einem Arbeitsgang die Schüsselausdünnung und die Umbördelung des Felgenhorns erfolgen.

Um Radschüssel und Felge vor Korrosion zu schützen, können beide Teile aus korrosionsgeschütztem, insbesondere verzinktem oder aluminiertem Stahlblech bestehen. Alternativ können die Felge und insbesondere die die Optik bestimmende Radschüssel aus Edelstahl bestehen. Für die Radschüssel ist vor allem Dualphasen-Stahl, TRIP-Stahl oder LIP-S tahl geeignet. Für die Felge eignet sich vor allem LIP-S tahl.

Die Herstellung der Radschüssel kann durch Warmumformung erfolgen. In diesem Fall besteht sie aus einem Vergütungsstahl, z.B. der Güte 22 Mn B 5. Der umzuformende Blech rohling kann außerhalb oder im Umformwerkzeug auf die erforderliche Umformtemperatur gebracht werden. Nach dem Umformen erfolgt eine gezielte Kühlung zum Einstellen der Werkstofffestigkeit, vorzugsweise wenn die Radschüssel sich noch im Umformwerkzeug befindet.

Im folgenden wird die Erfindung anhand einer ein Ausführungsbeispiel darstellenden Zeichnung näher erläutert. Im einzelnen zeigen:

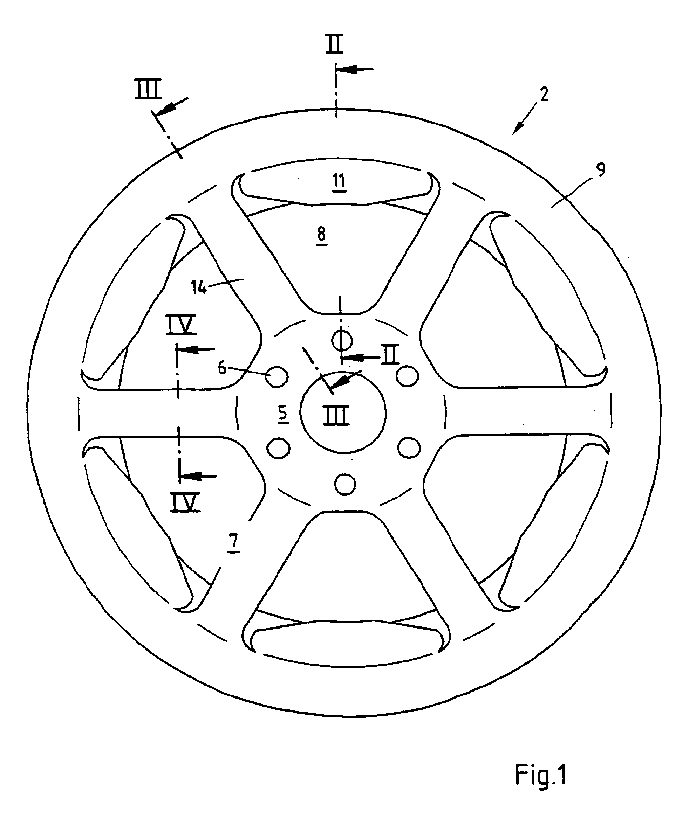

- Fig. 1: ein Fahrzeugrad in Ansicht von der Außenseite aus,
- Fig. 2: das Fahrzeugrad gemäß Fig. 1 im Teilquerschnitt nach Linie II-II der Fig. 1,
- Fig. 3: das Fahrzeugrad gemäß Fig. 1 im Teilquerschnitt nach der Linie III-III der Fig. 1 und
- Fig.4: das Fahrzeugrad gemäß Fig. 1 im vergrößerten Teilquerschnitt nach der Linie IV-IV der Fig. 1.

Das Fahrzeugrad besteht aus zwei gefügten Blechformteilen, und zwar einer Felge 1 und einer Radschüssel 2. Sowohl die Felge 1 als auch die Radschüssel 2 bestehen aus Stahlblech.

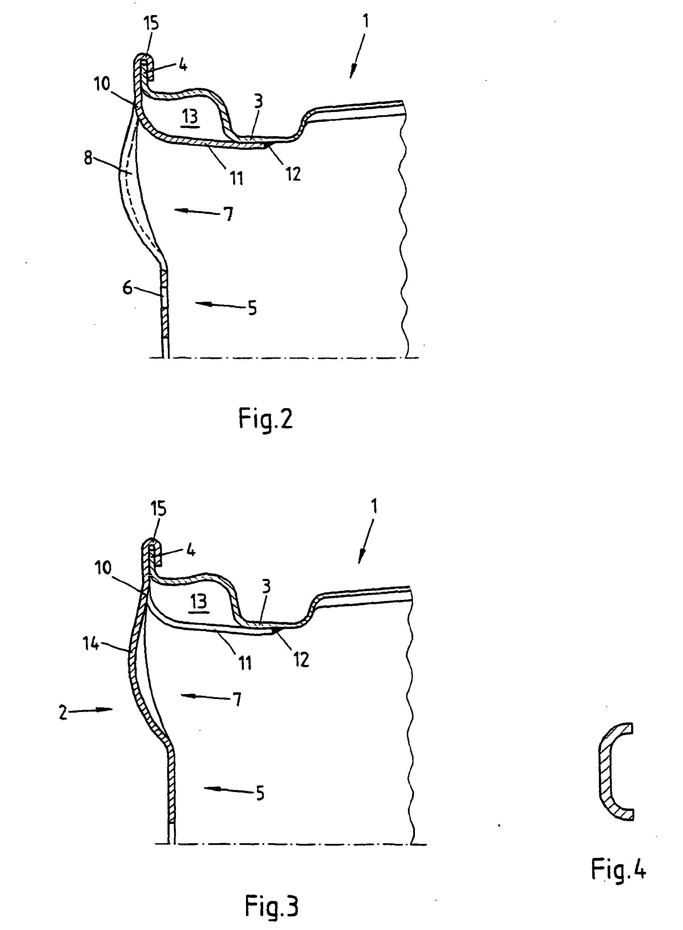

Die Felge 1 weist ein als Tiefbett ausgebildetes Felgenbett 3 und zwei Felgenhörner auf, von denen in den Figuren 2 und 3 nur das außenseitige Felgenhorn 4 dargestellt ist.

Die Radschüssel 2 weist einen zentralen Befestigungsbereich 5 mit Schraubenlöchern 6 für Radschrauben, einen um diesen Befestigungsbereich 5 herum liegenden Ringbereich 7 mit im wesentlichen trapezförmigen Belüftungsöffnungen 8 und einen äußeren Ringbereich 9 auf. Zur Bildung der Belüftungsöffnungen 8 sind aus dem Vollmaterial Teile derart freigeschnitten, dass die freigeschnittenen Teile nur noch an ihren Außenrändern 10 nach Art von Zungen angebunden sind. Die ausgeschnittenen Teile sind zur Radinnenseite umgebogen und bilden Laschen 11. Die Laschen 11 erstrecken sich bis in den Bereich des Tiefbettes 3, wo sie abstützend am Felgenbett anliegen und daran stoffschlüssig, insbesondere durch eine MIG-Lötung 12 angebunden sind. So bilden die Laschen 11 mit der Felge 1 versteifende, insbesondere verwindungssteife Hohlräume 13.

Die zwischen den Aussparungen 8 verbliebenen, radial verlaufenden Stege bilden Speichen 14. Sie sind leicht nach außen gewölbt und haben im Querschnitt eine Versteifungsprofilierung, wie der Detailschnitt der Fig. 4 zeigt. Die Versteifungsprofilierung sollte vor allem für die Übertragung hoher Biegekräfte ausgelegt sein.

Die Radschüssel 2 ist nicht nur über ihre Laschen 11 an die Felge 1 angebunden, sondern auch mit ihrem Außenrand, indem das außenseitige Felgenhorn 4 formschlüssig von dem Außenrand 15 der Radschüssel 2 umgriffen ist.

## Patentansprüche

1. Fahrzeugrad in Blechbauweise, insbesondere aus Stahlblech, mit einer ein Felgenbett (3) sowie ein außenseitiges und ein innenseitiges Felgenhorn (4) aufweisenden Felge (1) und einer mit dem außenseitigen Felgenhorn (4) verbundenen und das Felgenbett (3) abstützenden Radschüssel (2), die einen zentralen Befestigungsbereich (5) und in einem um diesen Befestigungsbereich (5) herum liegenden Ringbereich (7) Belüftungsöffnungen (8) aufweist, wobei die Radschüssel (2) einschalig ausgebildet ist und am radialen Außenrand (10) der Belüftungsöffnungen (8) Laschen (11) angebunden sind, die sich in Richtung des Felgenbettes (3) erstrecken und mit dem Felgenbett (3) fest verbunden sind,
**dadurch gekennzeichnet, dass** die zwischen den Belüftungsöffnungen (8) verbliebenen, radialen Stege sich bis zu dem Befestigungsbereich (5) erstrecken und als Speichen (14) mit einer versteifenden Profilierung ausgebildet sind, und die Radschüssel (2) mittels einer Umbördelung ihres Außenrandes (15)formschlüssig mit dem außenseitigen Felgenhorn (4) verbunden ist.

2. Fahrzeugrad nach Anspruch 1,
**dadurch gekennzeichnet, dass** die versteifende Profilierung bogenförmig ist.

3. Fahrzeugrad nach Anspruch 1 oder 2,
**dadurch gekennzeichnet, dass** der Ringbereich (7) zungenartig freigeschnittene Teile zur Bildung der Belüftungsöffnungen (8) und der Laschen (11) aufweist, wobei die die Laschen (11) bildenden freigeschnittenen zungenartigen Teile nur noch an ihren radialen Außenrändern (10) mit der Radschüssel (2) verbunden sowie zur Radinnenseite abgestellt sind.

4. Fahrzeugrad nach einem der Ansprüche 1 bis 3,
**dadurch gekennzeichnet, dass** zwischen den Laschen (11) und der Felge (1) Hohlräume (13) ausgebildet sind.

5. Fahrzeugrad nach einem der Ansprüche 1 bis 4,
**dadurch gekennzeichnet, dass** das Felgenbett (3) als Tiefbett ausgebildet ist.

6. Fahrzeugrad nach einem der Ansprüche 1 bis 5,
**dadurch gekennzeichnet, dass** die Verbindung zwischen dem Felgenbett (3) und den Laschen (11) der Radschüssel (2) stoffschlüssig ist.

7. Fahrzeugrad nach Anspruch 6,
**dadurch gekennzeichnet, dass** die stoffschlüssige Verbindung eine MIG-Lötung (12) ist.

8. Fahrzeugrad nach einem der Ansprüche 1 bis 7,
**dadurch gekennzeichnet, dass** die Blechdicke der Felge (1) in ihrem axialen Verlauf entsprechend der im Betrieb auftretenden lokalen Belastung dimensioniert ist.

9. Fahrzeugrad nach einem der Ansprüche 1 bis 8,
**dadurch gekennzeichnet, dass** die Blechdicke der Radschüssel (2) in ihrem radialen Verlauf entsprechend der im Betrieb auftretenden lokalen Belastung dimensioniert ist.

10. Fahrzeugrad nach einem der Ansprüche 1 bis 9,
**dadurch gekennzeichnet, dass** die Radschüssel (2) und die Felge (1) aus korrosionsgeschütztem, insbesondere verzinktem oder aluminiertem Stahlblech bestehen.

11. Fahrzeugrad nach einem der Ansprüche 1 bis 10,
**dadurch gekennzeichnet, dass** die Radschüssel (2) aus Dualphasenstahl, TRIP-Stahl oder LIP-Stahl besteht.

12. Fahrzeugrad nach einem der Ansprüche 1 bis 11,
**dadurch gekennzeichnet, dass** die Felge (1) aus LIP-Stahl besteht.

## Claims

1. Sheet metal vehicle wheel, in particular of sheet steel, comprising a rim (1) having a rim well (3) and an outer and an inner rim flange (4), and a wheel disc (2) connected to the outer rim flange (4) and supporting the rim well (3), which wheel disc (2) includes a central fixing region (5) and ventilation apertures (8) in an annular region (7) surrounding said fixing region (5), the wheel disc (2) having a single-walled configuration and straps (11) being connected to the radially outer edge (10) of the ventilation apertures (8), which straps (11) extend in the direction of the rim well (3) and are rigidly connected to the rim well (3),
**characterised in that** the radial webs remaining between the ventilation apertures (8) extend to the fixing region (5) and are configured as spokes (14) having a stiffening profiling, and the wheel disc (2) is connected in a form-fitting manner to the outer rim flange (4) by means of a beading formed by its outer edge (15).

2. Vehicle wheel according to claim 1,
**characterised in that** the stiffening profiling has arcuate configuration.

3. Vehicle wheel according to claim 1 or 2,
**characterised in that** the annular region (7) includes tongue-like parts cut to form the ventilation apertures (8) and the straps (11), the tongue-like cut parts that form the straps (11), being connected to the wheel disc (2) only by their radially outer edges (10) and being oriented towards the inner side of the wheel.

4. Vehicle wheel according to any one of claims 1 to 3,
**characterised in that** cavities (13) are formed between the straps (11) and the rim (1).

5. Vehicle wheel according to any one of claims 1 to 4, **characterised in that** the rim well (3) is configured as a drop-centre rim well.

6. Vehicle wheel according to any one of claims 1 to 5,
**characterised in that** the connection between the rim well (3) and the straps (11) of the wheel disc (2) is a material-connected joint.

7. Vehicle wheel according to claim 6,
**characterised in that** the material-connected joint is a MIG solder joint (12).

8. Vehicle wheel according to any one of claims 1 to 7,
**characterised in that** the thickness of the sheet metal of the rim (1) is dimensioned in its axial extension according to the local loading arising in operation.

9. Vehicle wheel according to any one of claims 1 to 8,
**characterised in that** the thickness of the sheet metal of the wheel disc (2) is dimensioned in its radial extension according to the local loading arising in operation.

10. Vehicle wheel according to any one of claims 1 to 9,
**characterised in that** the wheel disc (2) and the rim (1) are made of corrosion-protected, in particular zinc-coated or aluminium-coated sheet steel.

11. Vehicle wheel according to any one of claims 1 to 10,
**characterised in that** the wheel disc (2) is made of dual-phase steel, TRIP steel or LIP steel.

12. Vehicle wheel according to any one of claims 1 to 11,
**characterised in that** the rim (1) is made of LIP steel.

## Revendications

1. Roue de véhicule en tôle, en particulier en tôle d'acier, comprenant une jante (1) comprenant une embase de jante (3) ainsi qu'une joue de jante (4) côté externe et côté interne et un disque de roue (2) raccordé à la joue de jante (4) côté externe et soutenant l'embase de jante (3), le disque de roue présentant une zone de fixation centrale (5) et des ouvertures d'aération (8) dans une zone annulaire (7) disposée autour de cette zone de fixation (5), dans laquelle le disque de roue (2) se présente sous la forme d'une seule coque et des pattes (11) sont reliées au bord externe radial (10) des ouvertures d'aération (8), lesquelles pattes s'étendent dans la direction de l'embase de jante (3) et sont raccordées de manière fixe à l'embase de jante (3),
**caractérisée en ce que**
les nervures radiales restant entre les ouvertures d'aération (8) s'étendent jusqu'à la zone de fixation (5) et sont conformées en rayons (14) avec un profilage de renforcement et le disque de roue (2) est raccordé par complémentarité de forme à la joue de jante (4) côté externe au moyen d'un rabattement de son bord externe (15).

2. Roue de véhicule selon la revendication 1,
**caractérisée** e n ce q u e
le profilage de renforcement est en forme d'arc.

3. Roue de véhicule selon la revendication 1 ou 2,
**caractérisée en ce que**
la zone annulaire (7) présente des parties dégagées par découpe en forme de languettes pour former les ouvertures d'aération (8) et les pattes (11), lesquelles parties dégagées par découpe en forme de languettes formant les pattes (11) ne sont encore raccordées au disque de roue (2) que par leurs bords externes radiaux (10) et sont orientées vers le côté interne de la roue.

4. Roue de véhicule selon l'une quelconque des revendications 1 à 3,
**caractérisée en ce que**
des cavités (13) sont formées entre les pattes (11) et la jante (1).

5. Roue de véhicule selon l'une quelconque des revendications 1 à 4,
**caractérisée en ce que**
l'embase de jante (3) se présente sous la forme d'une embase creuse.

6. Roue de véhicule selon l'une quelconque des revendications 1 à 5,
**caractérisée en ce que**
le raccordement entre l'embase de jante (3) et les pattes (11) du disque de roue (2) se fait par fusion de matières.

7. Roue de véhicule selon la revendication 6,
**caractérisée en ce que**
le raccord par fusion de matières est un brasage de type MIG (12).

8. Roue de véhicule selon l'une quelconque des revendications 1 à 7,
**caractérisée en ce que**
l'épaisseur de tôle de la jante (1) est dimensionnée dans son tracé axial en fonction de la charge locale apparaissant en service.

9. Roue de véhicule selon l'une quelconque des revendications 1 à 8,
**caractérisée en ce que**
l'épaisseur de tôle du disque de roue (2) est dimensionnée dans son tracé radial en fonction de la charge locale apparaissant en service.

10. Roue de véhicule selon l'une quelconque des revendications 1 à 9,
**caractérisée en ce que**
le disque de roue (2) et la jante (1) sont constitués d'une tôle d'acier protégée contre la corrosion, en particulier galvanisée ou aluminisée.

11. Roue de véhicule selon l'une quelconque des revendications 1 à 10,
**caractérisée en ce que**
le disque de roue (2) est constitué d'acier double phase, d'acier de type TRIP ou d'acier de type LIP.

12. Roue de véhicule selon l'une quelconque des revendications 1 à 11,
**caractérisée en ce que**
la jante (1) est constituée d'acier de type LIP.
